# EUROPEAN PATENT SPECIFICATION

(11) **EP 3 305 392 B1**
(45) Date of publication and mention of the grant of the patent: **02.09.2020**
(21) Application number: 16192873.4
(22) Date of filing: 07.10.2016
(51) Int. Cl.: B01D 53/22, B01D 69/14

(54) **PHOTO-SWITCHING AND TUNING OF GAS TRANSPORT THROUGH METAL- ORGANIC FRAMEWORK MEMBRANES**
PHOTOSCHALTUNG UND ABSTIMMUNG DES GASTRANSPORTS DURCH MEMBRANE AUS METALL-ORGANISCHEN GERÜSTEN
DÉTECTION PHOTOÉLECTRIQUE ET RÉGULATION DU TRANSPORT DE GAZ À TRAVERS DES MEMBRANES DE STRUCTURES ORGANOMÉTALLIQUES

(43) Date of publication of application: 11.04.2018
(73) Proprietor: Karlsruher Institut für Technologie, 76131 Karlsruhe (DE); Gottfried Wilhelm Leibniz Universität Hannover, 30169 Hannover (DE)
(72) Inventor: CARO, Juergen, 13129 Berlin (DE); KNEBEL, Alexander, 30165 Hannover (DE); HEINKE, Lars, 76133 Karlsruhe (DE); GROSJEAN, Sylvain, 67000 Strasbourg (FR); WÖLL, Christof, 76185 Karlsruhe (DE); WANG, Zhengbang, 76297 Stutensee (DE); BRÄSE, Stefan, 53842 Troisdorf (DE)
(74) Representative: Fitzner, Uwe

(56) References cited:
- WO-A1-2014/015383
- JINHEE PARK ET AL: "Reversible Alteration of CO 2 Adsorption upon Photochemical or Thermal Treatment in a Metal-Organic Framework", JOURNAL OF THE AMERICAN CHEMICAL SOCIETY, vol. 134, no. 1, 11 January 2012 (2012-01-11), pages 99-102, XP055190232, ISSN: 0002-7863, DOI: 10.1021/ja209197f

## Description

The present invention is directed to process for the separation of a first gas from a gas steam comprising at least two different gases by controlling a gas transport through a metal-organic framework (MOF) film, an apparatus for the separation of gases and a method for controlling the permeability of a porous partition comprising a MOF film.

Processes for the production of MOF membranes as supported thin layers are known. WO 2013177199 A1 discloses the growth of continuous MOF membranes on porous polymeric supports, wherein a dip-coating procedure is used to deposit a layer of seed MOF nanocrystals on the surfaces of porous polymers, preferably in the form of hollow fibers, and polycrystalline MOF membranes are subsequently grown at temperatures as low as 65°C from precursor solutions. For example, WO 2014115177 A2 describes the in-situ process for the preparation of Metal-Organic Framework's (MOF's) - polymer composites at room temperature, without requirement of pre-seeding of MOF's or substrate modification. Further, the invention provides MOF-polymer composites membranes, wherein MOF forms a layer substantially covering the porosity of the membrane. Such supported MOF membranes of the ZIF subfamily (zeolitic imidazolate framework) have been especially developed for the separation of short chain olefins from paraffins as described in US 9248400 B2 and WO 2012164395.

In addition to the supported MOF layer as membrane, MOF particles can be brought as filler in polymers as continuous medium. This type of membrane is called mixed matrix membrane. In US 7637983 B1, MOF-polymer mixed matrix membranes (MOF-MMMs) have been prepared by dispersing high surface area MOFs (e.g. IRMOF-1) into a polymer matrix (e.g. Matrimid 5218). US 9248400 B2 and WO 2012164395 A1 describe certain embodiments which are directed to process for fabrication of zeolitic imidazolate framework (ZIF) membranes. These ZIF membranes can be used in separating C2- hydrocarbons from C3+- hydrocarbons and propylene/propane mixtures. The feed to be separated can also be a liquid as in the case of alcohol separation from aqueous alcohol mixtures by pervaporation using MOF-based Mixed Matrix Membranes as described in WO2012159224A1.

The effect of photo-isomerization of azo groups containing MOF layers is known. In WO 2014015383 A1 and EP 13823026 a process is described for the separation of a gas from a gas stream using metal organic framework which is switchable between a first conformation that allows the first gas species to be captured in the metal organic framework, and a second conformation that allows the release of the captured first gas species, using light as the switching stimulus. In this application, the backbone of the linker molecules of the MOF contains the photoactive unit and, therefore, the whole crystal structure expands and shrinks upon optical switching like an accordion or like a bellow.

The optical switchability of MOFs is also described such as in Wang et al. (Z. Wang, L. Heinke, J. Jelic, M. Cakici, M. Dommaschk, R.J. Maurer, H. Oberhofer, S. Grosjean, R. Herges, S. Brase, K. Reuter, C. Wöll, Photoswitching in nanoporous, crystalline solids: an experimental and theoretical study for azobenzene linkers incorporated in MOFs, Phys. Chem. Chem. Phys. 17 (2015) 14582-14587) the photo-switching in nanoporous crystalline MOFs with incorporated azobenzene linkers. It has been published that MOF layers on solid supports can be switched by light of the wavelength of 365 nm at room temperature from the thermodynamically stable trans state into the metastable cis state. Vice versa, light of 455 nm switches the cis state of the azo linker into the trans state of the linker. In a few publications, the influence of the photo-switching of linkers upon the adsorption properties is also described. Gong et al. (L.L. Gong, X.F. Feng, F. Luo, Novel azo-metal-organic framework showing a 10- connected bet net, breathing behavior, and unique photoswitching behavior towards CO2, Inorg. Chem. 54 (2015) 11587-11589) describes the influence of photo-switching of an azo-metal-organic framework on CO₂ capture/release. Modrow et al. (A. Modrow, D. Zargarani, R. Herges, N. Stock, Introducing a photo-switchable azofunctionality inside Cr-MIL-101-NH2 by covalent post-synthetic modification, Dalton Trans. 41 (2012) 8690-8696) describes the photo-switching of a MIL-type MOF and its influence on methane adsorption. A light-induced release of a dye from an azobenzene-containing MOF by photo-switching is described by Brown et al. (J.W. Brown, B.L. Henerson, M.D. Kiesz, A.C. Whalley, W. Morris, S. Gründer, H. Deng, H. Furukawa, J.I. Zink, J.F. Stoddart, O.M. Yaghi, Photophysical pore control in an azobenzene-containing metal-organic framework, Chem. Sei. 4 (2013) 2858-2864).

The above described prior art is based on the approach to capture a certain gas or molecule type from a mixture in a cage of the framework opened due to a first conformation of the switchable group and to release it after modifying the conformation. This approach does not permit a continuous processing.

Additionally, the proposed optical switching of the photo-active unit in the backbone of the linker molecules of the MOF as claimed in WO 2014015383 A1 and EP 13823026 is not practical since the whole crystal structure expands and shrinks upon optical switching like an accordion or like bellows. Therefore, this repeated shrinking and expansion cycles damages the framework mechanically. A further disadvantage of the separation performance of the membranes mentioned above is that (i) the optically switchable unit is part of the backbone of the linker molecule which forms the MOF and therefore, the mechanical expansions and shrinkings upon enlightening damage the framework itself and the adherence of the MOF to the support. Further, (ii) a defined gas selectivity of the MOF are unknown.

It is the object of the present invention to provide a method for the separation of a first gas from a gas mixture comprising at least two different gases which has no longer the above mentioned disadvantages of the prior art. Especially a continuous processing should be possible.

A further object is to provide a method and an apparatus with free adjustable selectivity and/or permeability of the separation means, especially with smallest possible effort.

The method and the means should be applicable for all different kind of gaseous mixtures.

These problems are solved by the subject matter according to the claims.

A first subject matter of the present invention is a process for the separation of a first gas from a gas mixture, composition or stream comprising at least two different gases by controlling a gas transport through a metal-organic framework (MOF) film.

According to the invention, controlling respectively control means that the amount and the composition of gas passing the MOF is tuned by enlightening the photo-switchable units of the MOF with external light. The amount of gas streaming through the MOF is characterized by the permeance, the change in the composition of feed gas and permeate gas is characterized by the separation factor.

In one embodiment the gas transport is controlled by photo-switching units. In one embodiment the photo-switching units are cis-trans photo-switching terminal units. In an other embodiment the photo-switchable units are open-closed switches selected from the group of Diarlyethene oder Spiropyran.

Photo-switchable cis-trans terminal units according to the invention are units or residues bound or linked to an atom which has a chemical double bound, e.g. an atom which is sp2-hybridized. Preferably said atom is selected from the group of C and N atoms. More preferably the photo-switchable terminal units or residues directly bound or linked to a C=C and/or N=N group.

Photo-switchable terminal units according to the invention are units or residues are selected from the group consisting of substituted and unsubstituted, preferably unsubstituted, alkyl groups having 1 to 10 carbon atoms, cycloalkyl groups having 5 to 12 carbon atoms, aryl groups having 6 to 16 carbon atoms and alkylcycloalkyl groups, alkylaryl groups, cycloalkylaryl groups and alkylcycloalkylaryl groups containing or consisting of the aforementioned alkyl, cycloalkyl and aryl groups. In one alternative the residue comprises at least one hetero atom selected from the group of N, O, S and P, preferably N.

In one alternative the residue is selected from aryls and heteroaryls, preferably pyridyl (pyridine) and/or phenyl (benzene).

In a further embodiment the gas transport is controlled by reversible photo-switching.

One embodiment is directed to a process wherein the gas transport is directed through a supported MOF substrate, a self-supporting MOF substrate and/or a mixed matrix substrate containing MOF crystals as filler.

Another embodiment is directed to a process wherein the MOF film is arranged, preferably directly on at least one side of a porous carrier substrate.

In one alternative the MOF film is arranged on a porous membrane material. Preferably a mesoporous metal oxide carrier, which is a support or membrane according to the invention, was used. More preferably the carrier is a mesoporous aluminum oxide support, especially an asymmetric mesoporous aluminum oxide support. The porous membranes have pores of 50 - 100 nm, preferably 55 - 90 nm, more preferably 55 - 80 nm, especially 60 - 70 nm.

The pore size of the porous ceramic, carbon or metallic support must be as narrow that the MOF layer is preferentially on top of the support and not inside its pore network. The porous supports can have pores of 1 -100 nm. Hydrophobic supports do not allow the infiltration by aqueous synthesis solution and, vice versa, hydrophilic supports prevent the infiltration by organic synthesis solutions.

In a further alternative the carrier is selected from ceramic discs, preferably comprising alpha-Al2O3 having an asymmetric structure.

In a preferred embodiment thin MOF films, so-called surface-mounted MOFs (SURMOFs), are used which are oriented and highly- crystalline. One alternative of the MOF , especially the so called SURMOF synthesis is disclosed in DOI: 10.1021/ja076210u, which is incorporated by reference. An other alternative of MOFs are the zeolitic imidazolate frameworks (ZIF), a MOF subfamily. ZIF can be produced according to US 9248400 B2 and WO 2012164395 which are incorporated by reference.

In a further embodiment the MOF film has a thickness of 0,001 to 1 µm, preferably 0,01 to 0,5 µm, more preferably 0,1 to 0,3 µm, especially about 0.2 µm.

One embodiment of the invention is directed to a process wherein the linkers of the metal-organic framework contain photo-swichable terminal units in their side chains.

A MOF consists of metal ions connected by anionic linker molecules. The linker molecules form and/or represent and/or are the lattice, which is equivalent to the backbone, of the MOF.

Side chains according to the invention are chains, units, residues and/or groups which are bond or linked by a covalent bond to this lattice. The above photo-swichable units, double-bounds and/or the sp2-hybridized atoms are suitably within these side chains backbone.

This language excludes in one alternative isomerisable groups, photo-swichable units, double-bounds and/or the sp2-hybridized atoms that are part of the lattice. Accordingly, the above photo-swichable units, double-bounds and/or the sp2-hybridized atoms are not suitably within the backbone of the MOF in this alternative.

To establish whether a group or unit is within the lattice, one can trace through the atoms from one end (co-ordinating to the metal atom) to the other, and none photo-switchable group (or part of the group) must be passed through in at least one route between the ends, then the photo-switchable group does not form part of the lattice.

Nevertheless, in one alternative the lattice can comprise additionally isomerisable groups, photo-swichable units, double-bounds and/or the sp2-hybridized atoms are suitably within the backbone.

An isomerisable group comprises at least one photo-swichable unit, at least one double-bounds and at least two sp2-hybridized atoms.

In one alternative the MOF films are fabricated by growing in a layer-by-layer fashion the MOF on the carrier substrate, employing liquid- phase epitaxy by alternatively immersing the sample in solutions containing the MOF components, i.e. in (separate) solutions of the metal knots and of the organic linker molecules. This technique yields monolithic, crystalline, continuous MOF films, referred to as surface-mounted MOFs (SURMOFs). The prepared MOF films may have a pillared-layer structure.

In a further embodiment the MOF comprises at least two different linkers forming the lattice of the metal-organic framework. Preferably a first linker in or as the layer structure and a second linker in or as pillar structure.

Preferably the metal atoms respectively ions of the MOF lattice are Cu or Zn ions. The linker are selected from AzoBPDC and AzoBiPyB. (AzoBPDC: 2-phenyldiazenyl-4,4'-biphenyldicarboxylic acid, and AzoBiPyB: *(E)*- 4,4'-(2-(phenyldiazenyl)-l,4-phenylene)dipyridine (or dipyridylazobenzene).

Especially the MOF is defined by the formula Cu₂(AzoBPDC)₂(AzoBiPyB) with three azobenzene moieties per unit cell, results in large effects of the trans-cis switching.

In one alternative, before the synthesis of the MOF, the porous aluminum oxide substrates are functionalized by oxygen plasma treatment.

An embodiment of the invention is the process wherein the entirety of the photo-swichable units are switched into a defined state providing a defined gas selectivity by variation of the enlightening time, variation of the irradiation wavelength and/or by using a defined ratio of light with two different wavelengths. The defined state according to the invention is characterized by a certain, well defined ratio of cis to trans isomers within the MOF film.

The gas mixture comprising at least two different gases comprises gases selected from the group of H2, N2, CO2, O2, SO, SO2, NO, NO2, noble gases, CH4, C2H6, C3H8, C4H10, C2H4, C2H2. As the process of the invention can be performed at decreased pressure and/or increased temperature gases according to the invention are especially also H2O and other compounds which are in the gasous phase under the respective conditions of pressure and/or temperature. Preferably the mixture comprises gases selected from the group of H2, N2, CO2, O2, SO, SO2, NO, NO2, CH4, C2H6, C3H8, C4H10 and H2O, more preferably H2, N2 and CO2, especially mixtures of H2 with CO2, N2 with CO2 and CO2 with CH4.

In one alternative the MOF film is enlightened with light of a defined wavelength produced by a commercial LED and send via an optical fiber to the MOF film surface.

Depending on the ratio of cis to trans isomers present in the MOF film a separation factor alpha (first gas/second gas) of at least 3, preferably 4, more preferably 7, especially 10 or more can be achieved. The separation factor alpha is defined as the ratio of the permeance of the gases to be separated.

The novel process is particularly suitable for the production of gas mixtures with a certain composition and for the switch of the amount of gas passing a membrane. By applying light of defined wavelengths, linker molecules of the MOF undergo a trans-cis photo-isomerization and the gas flow through the membrane can become higher or lower and the selectivity of the separation can become higher and lower.

A further subject matter of the present invention is a MOF, especially a MOF arranged on a carrier as described above.

Another matter of the present invention is a powder MOF, especially a MOF as described above in form of a powder.

The powder MOF can be arranged on a porous carrier or used directly. The powder MOF is absorbs a gas by the photo-switchable units in cis isomeric state and release it after switching the units in trans state.

Accordingly any membrane selectivity between the two extreme conformations of 100% trans or maximum amount cis can be adressed by either tuning the duration of enlightening or by enlightening with the proper ratio of the wavelength of light leading to the trans or cis state. One embodiment is directed to a cis amount (i.e. the switching yield) smaller than 100%, preferably about 60-80%.

An other subject matter is an apparatus for the separation of gases comprising a housing, at least one inlet for the gases to be separated, a selectively gas-permeable partition comprising a MOF film comprising photo-switching units, at least one retentate-outlet on the same side of the partition as the inlet, at least one permeate-outlet on the opposite site of the partition and at least one light guide. In one embodiment the photo-switching units are cis-trans photo-switching terminal units. In an other embodiment the photo-switchable units are open-closed switches selected from the group of Diarlyethene oder Spiropyran.

The housing, the inlet and outlet is composed of materials which are inert with regard to the gases to be separated, preferably materials selected from the group of stainless steel, alloys, teflon or coated materials.

In one alternative the apparatus comprises at least one inlet for a sweep gas.

In one embodiment is used in the above disclosed process of the invention using the MOF as disclosed above.

A further subject matter of the invention is a method for controlling the permeability of a porous partition comprising a MOF film comprising at least two different cis-trans photo-switching units by enlightening said MOF film with light of two different wavelength.

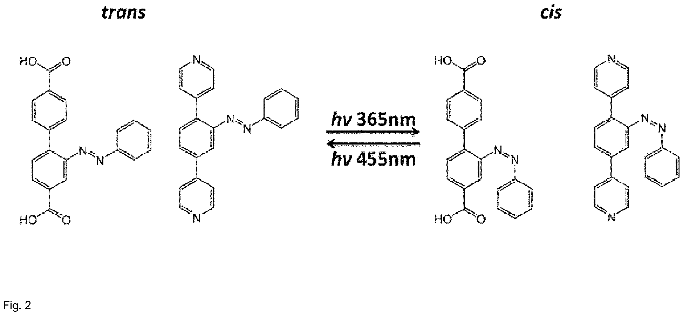

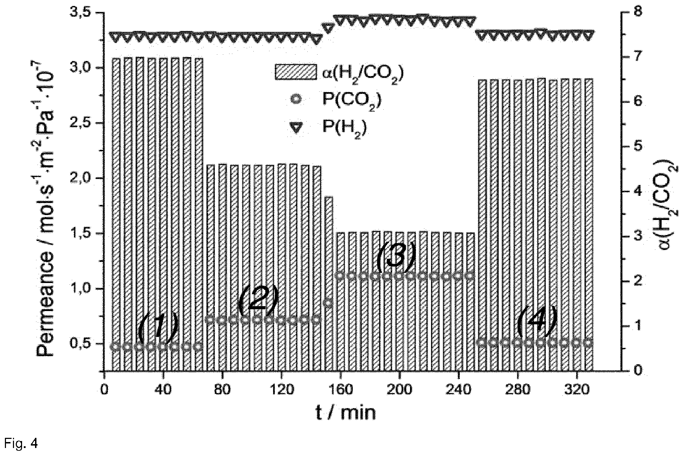

The invention is further described by the figures and the following features, which does not represent any restriction of the general disclosure and teaching of the invention:
Fig. 1A illustrates schematically the the gas permeation. As fee, a single component gas or a mixed gas such as a H2/CO2 mixture e.g., streams through one chamber (here the upper one) of the permeation cell. Depending on the nature of the membrane, certain gases show a specific selectivity for passing the MOF membrane. The retentate gas stream is depleted in the components that preferentially pass the membrane, here hydrogen. The supported, self- supporting or mixed matrix MOF membrane is enlightened by a light of a certain wavelength, e.g. produced by an LED.
Fig. 1B shows a apparatus according to the invention, an alternative of a photos-witchable membrane permeation setup. The feed-retentate gas flow is above the membrane, while the sweep-permeate gas flow is below the membrane. A fiber-coupled LED is used for in situ irradiation of the MOF-covered top-side of the alumina carrier, a membrane as mentioned in Fig. 1A.
Fig. 1C illustrates a SEM (Scanning Electron Microscopy) cross-section image of the SURMOF membrane on the mesoporous a-alumina support. A dense SURMOF layer with a thickness of roughly 2 µm is observed.
Fig. 1D: Schematic illustration of tunable, remote-controllable molecular selectivity by a photo-switchable MOF film on a carrier, a so called MOF membrane. The molecular separation factor, giving the composition of the permeation flux, can be continuously tuned.
Fig. 2 shows as an example the trans-cis isomerization of linker molecules with azo-groups in the side chain of the linker molecules.
Fig. 3 shows how these two types of azo-groups containing molecules can be used to form the mixed-linker MOF Cu2(Azo-BPDC)2(Azo-BiPyB). Synthesis and nomenclature of this MOF is described in Wang et al. 2015.
Fig. 4: Influence of photo-switching of a MOF film as shown in Fig. 3 on gas transport of a mixture H2/CO2. Enlightening the thermodynamically stable trans state of the linker shown in Fig. 2 with light of the wavelength of 365 nm brings the membrane into the cis state with lower CO2 permeance and higher separation factor α(H2/CO2). Note that the membrane can be switched also in an intermediate state with medium selectivity.
   The MOF as shown in Fig. 4 was prepared as a surface layer as described Wang et al., 2015, with Azo- BPDC and Azo-BiPyB as layer and pillar linkers simultaneously. The MOF film with a thickness of about 0.2 µm was prepared on a ceramic disc from Inocermic (Hermsdorf, Germany) comprising 0Al2O3 having an asymmetric structure and a mean pore diameter of 70nm. At room temperature, both linker molecules as shown in Fig. 2 are in the thermodynamically stable trans-state of the azo-group. A mixed equimolar H2/CO2 was given to the feed side of the membrane at 1 bar and 23°C. The amounts of gases passing the membrane are characterized by their permeances. The hydrogen permeance was found to be 3.4^{∗}1 0⁻⁷mols⁻¹m⁻²Pa⁻¹, the CO2 permeance was found to be 1.2 ^{∗} 10⁻⁷mols⁻¹m⁻²Pa⁻¹. This gives a mixed gas separation factor α(H2/CO2) = 3.2. Now the MOF membrane is enlightened with light of a wavelength of 365 nm produced by a commercial LED and send via an optical fiber to the membrane surface. After 15 min about 60 % of the azo-groups are in the cis-state and the following gas permeances are measured: The H2 permeance was found to remained almost unchanged and decreased slightly to a value of 3.2^{∗}10⁻⁷mols⁻¹m⁻²Pa⁻¹, whereas the CO2 permeance was found to drop to a value of 0.4^{∗}10⁻⁷mols⁻¹m⁻²Pa⁻¹. As the ratio of the H2 and CO2 permeances, this gives a mixed gas separation factor α(H2/CO2) = 7.0 for the MOF membrane in the cis-state. At room temperature, for thermodynamic and photochemical reasons about 60 % of the azo-molecules are in the cis-state, 40% are still in the trans-state. Defined gas selectivities can be obtained when shortening the enlightening time. When only enlightening the MOF membrane for 7 min, a medium switching state with 20% cis and 80% trans can be obtained. This defined medium-state switched membrane with a hydrogen permeance 3,3 ^{∗} 10⁻⁷mols⁻¹m⁻²Pa⁻¹, and a carbon dioxide permeance of 0.7^{∗}10⁻⁷mols⁻¹m⁻²Pa⁻¹ gave a mixed gas separation factor α(H2/CO2) - 4.5 at room temperature.

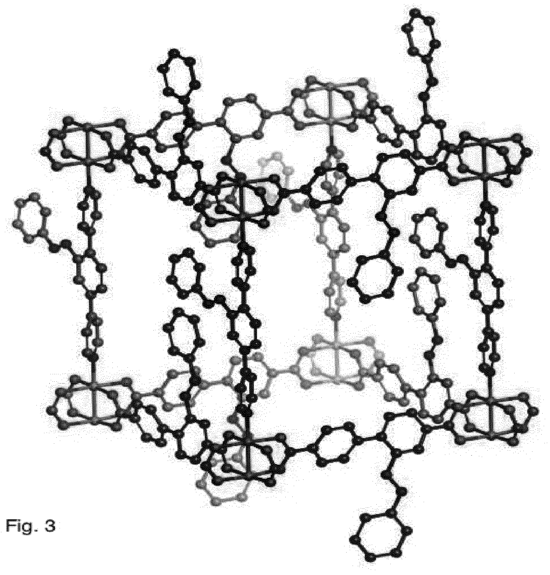

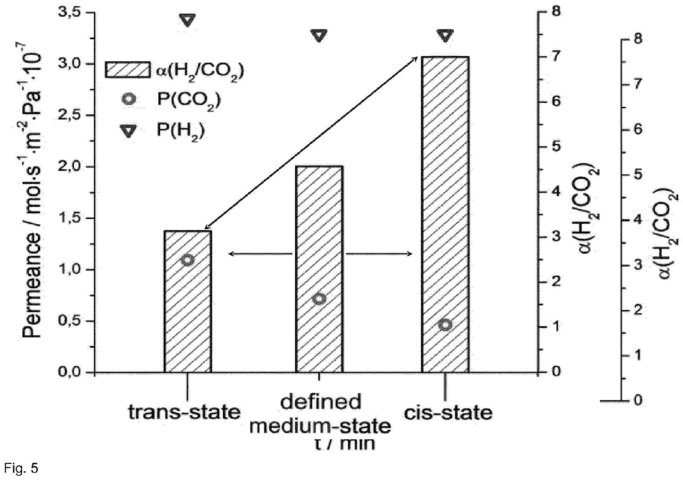

Fig. 5: Reversibility of the optical switching of the MOF membrane with the structure shown in Fig. 3. The switching states are (I) cis, (2) medium intermediate state, (3) trans, and (4) again cis. Fig. 5 proofs the reversibility of switching. After switching the MOF membrane for 15 min with light of a wavelength of 365 nm into the cis state with about 40 % of the azo-groups in cis, the light is switched off and the membrane shows long-time stable permeation characteristics as discussed in Fig. 4: The hydrogen permeance is 3.2 ^{∗}10⁻⁷mols⁻¹m⁻²Pa⁻¹, the carbon dioxide permeance is 0,4 ^{∗} 10⁻⁷mols⁻¹m⁻²Pa⁻¹, this gives a mixed gas separation factor α(H2/CO2) = 7.0 for the MOF membrane in the cis state. After enlightening the membrane for 8 min with light of the wavelength 455 nm, about 20 % of the azo groups were switched from cis to trans and the medium-state membrane contains 20% cis and 80 % trans azo groups. Without further enlightening, the mixed gas permeation properties are long-time stable at room temperature and show values as discussed in Fig. 4. Now the membrane is switched with light of a wavelength of 455 nm for another 8 min back into the trans state with about 100% of the azo groups in trans. Without further enlightening, the mixed gas permeation properties are long-time stable and show values as discussed in Fig. 4. Now the membrane can be switched again within 15 min into the cis-state where after stopping the enlightening again long-time stable permeation properties are measured which are identical with those before the switching cycle started.

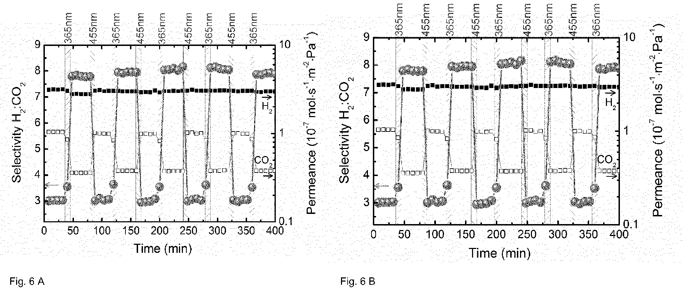

Fig. 6: Photoswitchable membrane separation of H2:CO2(a) and N2:CO2(b) mixtures. The membrane is irradiated by light of 365 nm and 455 nm for 5 min each. The permeances of H2 and CO2 (a) as well as N2 and CO2 (b) are shown as black solid squares and black open squares, respectively, with the logarithmic scale on the right-hand side. The molecular selectivities (or separation factors) are shown as spheres with the scale on the left-hand side.
   The membrane permeances (i.e. molecular fluxes) and separation factors of hydrogen and carbon dioxide from the 50%:50% feed mixture are shown in Figure 6 A. The high separation factor indicates the absence of defects and pinholes in the membrane. While the permeation of hydrogen decreases only slightly, the permeation of carbon dioxide significantly decreases upon switching the azobenzene-containing MOF membrane from trans to cis. The CO2 permeance can be switched between approximately 4 and 10 x 10⁻⁸mols⁻¹m⁻²Pa⁻¹. The molecular H2 to CO2 separation factor increases from 3.0 in the trans state (i.e. 100% trans, 0% cis) to about 8.0 in the cis state (i.e. 37% trans, 63% cis). After irradiation with 455 nm, i.e. the azobenzene side groups are switched back to the basic trans state, the initial permeances and the separation factor of 3 are attained. Five consecutive cycles of irradiation with 365 nm and 455 nm, i.e. switching between the trans and the cis state, were performed. It was found that the switching of the membrane permeance and separation factor are fully reversible and, in addition, shows no sign of bleaching.
   The molecular mechanism resulting in the switching of the molecular separation is related to the different interaction of the hydrogen and carbon dioxide multipole moments with the cis- or trans-MOF, rather than a pore size effect or steric hindrance. Indeed, the dipole moment of the cis azobenzene is expected to result in a higher attractive interaction with the fairly strong quadrupole-moment of carbon dioxide, thus slowing down the carbon dioxide diffusion, while the interaction with hydrogen is not affected by the trans-cis switching. As a result, the different impact of the trans-cis switching leads to the switching of the H2:CO2 separation factor.
   A reversible switching of the molecular selectivity is also observed for the separation of the N2:CO2 mixture, where the selectivity increases from 5.5 to 8.5 when switching from trans to cis, see Figure 6 B. While the carbon dioxide permeation significantly decreases upon trans-to-cis isomerization, the nitrogen permeation is hardly affected. The observed permeation selectivity of nitrogen over carbon dioxide is characteristic for wide-pore MOF/zeolite membranes with an adsorption controlled separation mechanism, whereas narrow-pore MOF/zeolite membranes show a preferred carbon dioxide (critical diameter 3.3A) permeation in comparison with nitrogen (3.6 Ä) due to a diffusion-controlled molecular sieve mechanism.

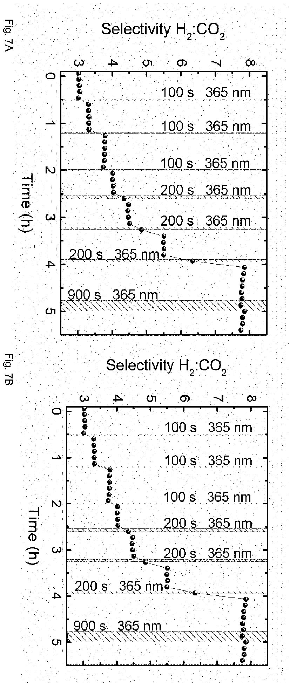

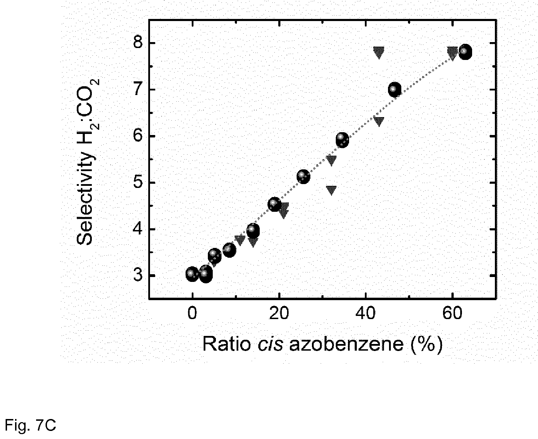

Fig. 7: Tuning the H2:CO2 separation factor by adjusting the cis - trans azobenzene ratio,
   A) The Cu2(AzoBPDC)2(AzoBiPyB) membrane, which is initially in the trans state, is irradiated with UV light for time intervals of 100 s and 200 s, resulting in an increase of the H2:CO2 selectivity;
   B) The membrane is initially in the cis state and is irradiated with 455 nm for time intervals of 30 s and 50 s.
   C) Correlation of the H2:CO2 separation factor with the ratio of cis azobenzene. The grey triangle and black spheres represent the data from figure a) and b). respectively; .

A profound feature of the photoswitchable membrane is that the impressive (On-Off) switching of the separation factors (between membranes with minimum and maximum cis ratios) can be combined with the option of fine-tuning the cis azobenzene ratios. The H2:CO2 separation factor of the membrane in the trans state can be increased in arbitrary steps until the maximum separation factor is reached by irradiation with UV light for certain time. Figure 7A. On the other hand, the separation factor of the cis membrane can be decreased in arbitrary steps by irradiation with 455 nm. Figure 7B. Thus, the separation factor can not only be switched between the minimum and maximum values, i.e. 3.0 for 0 % cis azobenzene and 8.0 for 63% cis azobenzene, but also each value in between can be realized by choosing appropriate irradiation times, i.e. by adjusting the cis azobenzene ratio. The continuous tuning of the cis azobenzene ratio by controlled irradiation times with UV or visible light thus allows for a continuous tuning of the separation factor. A correlation of the membrane selectivity with the cis-azobenzene ratio from the IRRAS data is shown in Figure 7c. Due to the slow thermal isomerization of the azobenzene groups, the separation factor belonging to a mixed cis: Ira ns state, once adjusted, is stable in the dark for the duration of the experiments.

The ratio of the azobenzene isomers can also be controlled by adjusting the relative intensities of the multi-component light irradiation with UV and visible light. For instance, a H2:CO2 selectivity of 4.5 is reached for a cis ratio of about 20%. This ratio can be adjusted by irradiating the (100%) trans membrane with 365 nm for about 500 s (see Figure 7A), by irradiating the (63%) cis membrane with 455 nm for about 120 s (see Figure 7B) or by simultaneously irradiating the sample with 365 nm and 455 nm with an intensity ratio of about 20%: 80%.

By increasing the cis ratio, i.e. by increasing the irradiation time with UV light or by increasing the relative UV intensity, the separation factor is increased. Here, the maximum ratio of cis azobenzene is about 63 %, resulting in the highest separation factor of about 8.0. Even higher cis-trans isomerization ratios, e.g. enabled by functionalized azobenzene moieties would result in higher switching yields and would enlarge the tunable separation factor range.

The potential of the tunable membrane is demonstrated by controlling the molecular composition of the H2:CO2 permeate flux and, therewith, controlling the flammability and the safety of this pre-combustion mixture when mixed with air or oxygen. When the permeate flux is mixed with air in a ratio 1:20, the resulting gas flow of the membrane in the trans state has a hydrogen content of 3.7 %, while the flux through the cis membrane has a hydrogen content of 4.4 %. Since the flammability limit of hydrogen in air is 4.0 %,50 the photoswitchable membrane in the cis state results in a flammable gas mixture and the trans membrane in a non-flammable gas mixture. When the permeate flux is mixed with air in a ratio 1:6, the flux through the cis membrane (with an H2 content of 12.7 %) may be detonable while the flux through the trans membrane (with an H2 content of 10.7 %) is not detonable. As demonstrated above, each composition in between can be tuned, enabling a remote-controlled adjusting of hazardous or non- hazardous conditions.

The invention is further illustrated by the examples:

### Example 1

A ZIF-8 membrane was grown on a ceramic disc from Inocermic (Hermsdorf, Germany) comprising (X-Al2O3 having an asymmetric structure and a mean pore diameter of 60 nm, The MOF membrane contained azo-linkers as shown in Fig. 3. An equimolar H2/CO2 gas mixture was given to the feed side of the membrane at 1 bar and 23°C. The H2 permeance was found to be 3.4^{∗}10⁻⁷mols⁻¹m⁻²Pa⁻¹, the CO2 permeance was found to be 1.2 ^{∗} 10⁻⁷mols⁻¹m⁻²Pa⁻¹ which gave a mixed gas separation factor α(H2/CO2) = 3.2. After that the MOF membrane was enlightened with light of a wavelength of 365 nm produced by a commercial LED and send via an optical fiber to the membrane surface. After 15 min the light was switched off and the gas permeances were measured again: The H2 permeance was found to remain almost unchanged with 3.2^{∗}10⁻⁷mols⁻¹m⁻²Pa⁻¹, whereas the CO2 permeance was found to droped to a value of 0.4 ^{∗}10⁻⁷mols⁻¹m⁻²Pa⁻¹. Without enlightening, the photo-switchable units remained in the cis state for at least 24 h and exhibited constant gas separation performance. Afterwards the photo-switchable units has been switched back from the cis state into the trans state with an enlightening time of 5 min with light of a wavelength of 455 nm back. After 5 min enlightening the light was switched off and the gas separation performance has been measured. The gas separation was found to be identical with the state before switching.

### Example 2

In this example, the photo-switchable units has been switched from the cis state into an intermediate state between trans and cis and also the gas separation pattern of the intermediate membrane is between the trans and cis state. A ZIF-90 membrane was grown on a ceramic disc from Inocermic (Hermsdorf, Germany) comprising -Al2O3 having an asymmetric structure and a mean pore diameter of 60 nm. After 15 min enlightening the MOF membrane with light of a wavelength of 365 nm, the photo-switchable units were in cis state and exhibited the following gas permeance values: The H2 permeance was 3.2^{∗}10⁻⁷mols⁻¹m⁻²Pa⁻¹, and the CO2 permeance was 0.4^{∗}10⁻⁷mols⁻¹m⁻²Pa⁻¹. As the ratio of the H2 and CO2 permeances, this gives a mixed gas separation factor α(H2/CO2) = 7.0 for the MOF membrane with the photo-switchable units in the cis-state.

Afterwards the photo-switchable units have been switched into an intermediate state between trans and cis by modification of the switching time. After 2.5 min enlightening the membrane with light of a wavelength of 455 nm, the following gas permeation properties have been measured: This defined medium-state switched membrane with a hydrogen permeance 3.3 ^{∗} 10⁻⁷mols⁻¹m⁻²Pa⁻¹, and a carbon dioxide permeance of 0.7 ^{∗} 10⁻⁷mols⁻¹M⁻²Pa⁻¹, this gives a mixed gas separation factor α(H2/CO2) = 4.5 at room temperature.

### Example 3

As outlined in Example 2, from both the trans and the cis states, the photo-switchable units can be photo-switched in a defined intermediate state between trans and cis with a controlled gas selectivity by variation of the switching time. In this example 3, switching of the photo-switchable units of the linker molecules from the thermodynamical at room temperature stable trans into the intermediate state was given. A ZIF-90 membrane grown on a ceramic disc from Inocermic (Hermsdorf, Germany) comprising C1-Al2O3 having an asymmetric structure and a mean pore diameter of 60 nm. Without enlightening, the photo-switchable units were in the trans state and showed the following gas permeation properties: H2 permeance was found to be 3.4-10⁻⁷mols⁻¹m⁻²Pa⁻¹, the CO2 permeance was found to be 1.2 ^{∗} 10⁻⁷mols⁻¹m^{- 2}Pa⁻¹ which gave a mixed gas separation factor α(H2/CO2) = 3.2. After enlightening this membrane with light of a wavelength of 365 nm for 7.5 min, an intermediate state with 80% of the photo-switchable units in the trans and 20% in the cis state was obtained. This intermediate trans-cis state membrane has shown the following gas permeation properties: H2 permeance 3,3 ^{∗} 10⁻⁷mols⁻¹m⁻²Pa⁻¹, CO2 permeance of 0.7 ^{∗} 10⁻⁷mols⁻¹m⁻²Pa⁻¹ which gives a mixed gas separation factor α(H2/CO2) = 4.5 at room temperature.

### Example 4

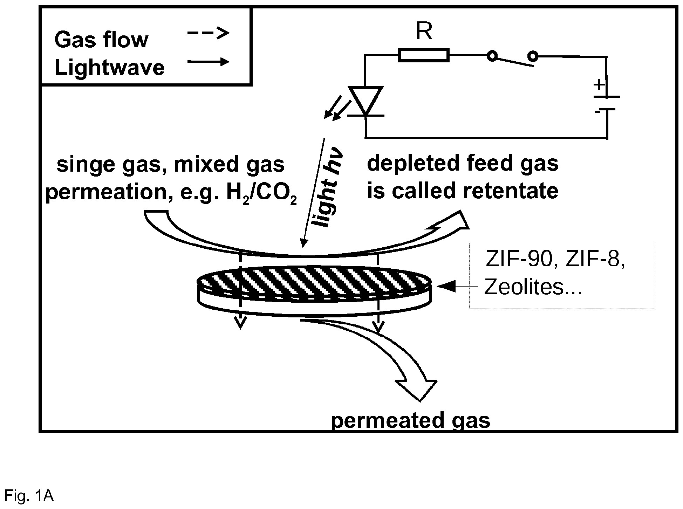

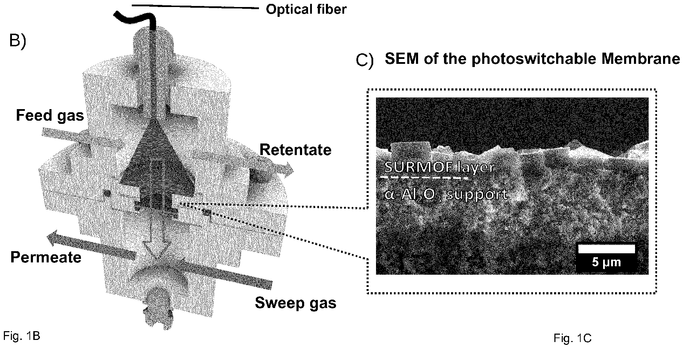

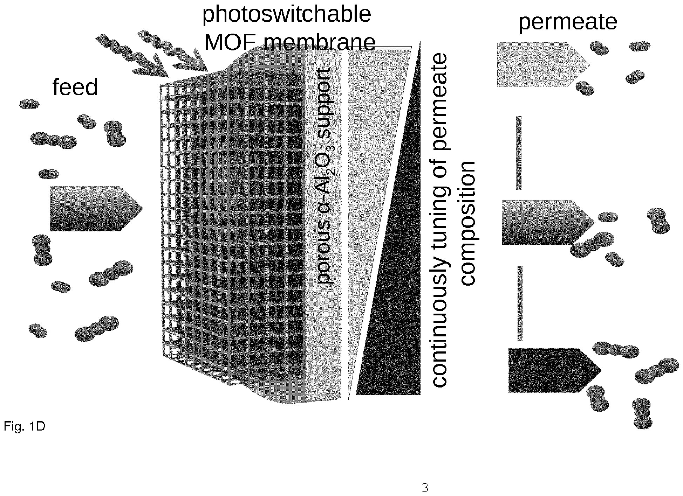

A powder MOF containing a switchable units in the side chain of the linker as shown in Fig. 3 was switched by enlightening with light of the wavelength 365 nm as shown in Figs. 1 and 2 into the cis state. After a switching time of 15 min, the MOF started to adsorb polar over nonpolar compounds. By switching the switchable units of the MOF which contained the adsorbed polar molecules into the trans state caused desorption the of the guest molecules. From an equimolar CO2/CH4 mixture the MOF absorbed as shown in Fig. 3 preferentially the CO2 which gave a composition of the adsorbed phase of 95% CO2 to 5% CH4 at 1 bar and room temperature. When the photo-switchable units were switched in the trans state, almost pure CO2 (98% CO2 and 2% CH4) was released and the composition of the adsorbed phase was 80% CO2 / 20% CH4.

### Example 5

A powder MOF containing switchable units in the side chain of the linker as shown in Fig. 3 was switched by light of 365 nm into the cis state as shown in Figs. 1 and 2. In the cis state of the photo-addressed units in the side chain of the linker, NO was pressed with 15 bar into the MOF. The pressure was released down to 1 bar and some part of the NO was desorbed. By switching the photo-switchable units into the trans state, the adsorbed NO was released.

### Example 6

Gas permeation was carried out using an online gas chromatograph Agilent Technologies 7890A. Evaluation of the membrane was performed by mixed-gas permeation. Viton O-Rings (FKM 70 Vi 370) were used to seal the membrane gas-tight in its housing. In-situ irradiation of the membrane layer was achieved by a fiber-coupled, monochromatic high power Prizmatix FC-5 LED. Before the permeation data was recorded, the membrane was activated at 50 °C in a pure nitrogen flow for 24 h. For precombustion hydrogen separation at 25 °C, a 50:50 mixture of H2:C02 was used at flow-rates of 25 ml/min each. The feed-gas was N2 at a 50 ml/min flow rate. For post-combustion separation at 35 °C, a 90:10 N2:C02 mixture was used at volumetric flow rates of 45 ml/min for N2 and 5 ml/min for C02. There, CH4 was applied on the sweep side at a flow rate of 50 ml/min. The experiments were performed at ambient pressure, i.e. no overpressure was applied.

## Claims

1. A process for the separation of a first gas from a gas mixture comprising at least two different gases by controlling a gas transport through a metal-organic framework (MOF) film,
**characterized in that**
- the linkers of the metal-organic framework contain photo-switchable terminal units in their side chains, and
- the entirety of the photo-switchable units are switched into a defined state providing a defined gas selectivity by variation of the enlightening time, variation of the irradiation wavelength and/or by using a defined ratio of light with two different wavelengths, wherein the defined state is **characterized by** a certain, well defined ratio of cis to trans isomers within the MOF film.

2. The process of claim 1 wherein the gas transport is controlled by cis-trans photo-switching of terminal units.

3. The process as claimed in any of claims 1 or 2 wherein the gas transport is controlled by reversible photo-switching.

4. The process as claimed in any of claims 1 to 3 wherein the gas transport is directed through a supported MOF substrate, a self-supporting MOF substrate and/or a mixed matrix substrate containing MOF crystals as filler.

5. The process as claimed in any of claims 1 to 4 wherein the MOF film is arranged on a porous carrier substrate.

6. The process as claimed in any of claims 1 to 5 wherein the MOF film is arranged on a porous membrane material.

7. The process as claimed in any of claims 1 to 6 wherein the MOF film has a thickness of 0,001 to 1 µm, preferably 0,01 to 0,5 µm, more preferably 0,1 to 0,3 µm, especially about 0.2 µm.

8. The process as claimed in any of claims 1 to 7 wherein the MOF comprises at least two different linkers forming the lattice of the metal-organic framework.

9. The process as claimed in any of claims 1 to 8 wherein the MOF comprises isomerisable groups comprising C=C, N=N and/or C=N double bounds.

10. An apparatus for the separation of gases comprising a housing, at least one inlet for the gases to be separated, a selectively gas-permeable partition comprising a MOF film comprising photo-switching units, at least one retentate-outlet on the same side of the partition as the inlet, at least one permeate-outlet on the opposite site of the partition and at least one light guide,
**characterized in that**
- the linkers of the metal-organic framework contain photo-switchable terminal units in their side chains,
- the entirety of the photo-switchable units are in a defined state providing a defined gas selectivity by variation of the enlightening time, variation of the irradiation wavelength and/or by using a defined ratio of light with two different wavelengths, wherein the defined state is **characterized by** a certain, well defined ratio of cis to trans isomers within the MOF film.

11. The apparatus of claim 10 comprising at least one inlet for a sweep gas.

12. The apparatus of claim 10 or 11 for the separation of gases in a process according to anyone of the claims 1 to 9.

## Patentansprüche

1. Ein Verfahren für die Abscheidung eines ersten Gases von einem Gasgemisch, welches mindestens zwei verschiedene Gase enthält, durch Steuerung eines Gastransports durch einen metall-organischen Gerüstfilm (MOF film),
**dadurch gekennzeichnet, dass**
- die Linker des metall-organischen Gerüstes photoschaltbare Endeinheiten an ihren Seitenketten enthalten, und
- die Gesamtheit der photoschaltbaren Einheiten in einen definierten Zustand geschaltet werden, der eine definierte Gasselektivität zur Verfügung stellt durch Variation der Erhellungszeit, Variation der Bestrahlungswellenlänge und/oder durch Gebrauch eines definierten Verhältnisses von Licht mit zwei verschiedenen Wellenlängen, wobei der definierte Zustand charakterisiert ist durch ein bestimmtes, gut definiertes Verhältnis von cis- zu trans- Isomeren innerhalb des metall-organischen Gerüstfilms.

2. Verfahren gemäß Anspruch 1, wonach der Gastransport durch cis-trans-Photoschaltung von Endeinheiten gesteuert wird.

3. Verfahren nach einem der Ansprüche 1 oder 2, wonach der Gastransport durch reversible Photoschaltung gesteuert wird.

4. Verfahren nach einem der Ansprüche 1 bis 3, wonach der Gastransport durch ein gestütztes metall-organisches Gerüstsubstrat, ein selbstgestütztes metallorganisches Gerüstsubstrat und/oder ein gemischtes Matrixsubstrat geleitet wird, metall-organische Gerüstkristalle als Füller enthaltend.

5. Verfahren nach einem der Ansprüche 1 bis 4, wonach der metall-organische Gerüstfilm auf einem porösen Trägersubstrat arrangiert ist.

6. Verfahren nach einem der Ansprüche 1 bis 5, wonach der metall -organische Gerüstfilm auf einem porösen Membranmaterial arrangiert ist.

7. Verfahren gemäß einem der Ansprüche 1 bis 6, wonach der metall-organische Gerüstfilm eine Dicke von 0,001 bis 1 µm, vorzugsweise 0,01 bis 0,5 µm, stärker bevorzugt 0,1 bis 0,3 µm, insbesondere ungefähr 0.2 µm hat.

8. Verfahren gemäß einem der Ansprüche 1 bis 7, wonach das metall-organische Gerüst wenigstens zwei verschiedene Linker enthält, die ein Gitter des metall-organischen Gerüstes formen.

9. Verfahren nach einem der Ansprüche 1 bis 8, wonach das metall-organische Gerüst isomerierbare Gruppen enthält, welche C=C, N=N und/ oder C=N Doppelbindungen enthalten.

10. Ein Gerät für die Abscheidung von Gasen, enthaltend ein Gehäuse, wenigstens einen Eingang für die abzuscheidenden Gase, eine selektiv gasdurchlässige Trennwand, welche einen metall-organischen Gerüstfilm enthält, der photoschaltbare Einheiten enthält, wenigstens einen Retentatausgang auf derselben Seite von der Trennwand wie der Eingang, wenigstens einen Permeat-Ausgang auf der gegenüber liegenden Seite der Trennwand und wenigstens einen Lichtleiter,
**dadurch gekennzeichnet, dass**
- die Linker des metall-organischen Gerüstes photoschaltbare Endeinheiten an ihren Seitenketten enthalten,
- die Gesamtheit der photoschaltbaren Einheiten in einen definierten Zustand geschaltet werden, der eine definierte Gasselektivität zur Verfügung stellt durch Variation der Erhellungszeit, Variation der Bestrahlungswellenlänge und/oder durch Gebrauch eines definierten Verhältnisses von Licht mit zwei verschiedenen Wellenlängen, wobei der definierte Zustand charakterisiert ist durch ein bestimmtes, gut definiertes Verhältnis von cis- zu trans- Isomeren innerhalb des metall-organischen Gerüstfilms.

11. Gerät gemäß Anspruch 10, welches wenigsten einen Eingang für ein Spülgas enthält.

12. Gerät gemäß den Ansprüchen 10 oder 11 für die Trennung von Gasen in einem Verfahren gemäß einem der Ansprüche 1 bis 9.

## Revendications

1. Un procédé pour la séparation d'un premier gaz d'un mélange de gaz, que contient au moins deux gaz différents, par contrôle d'un transport de gaz par un film d'échafaudage métallo-organique (MOF film), **caractérisé en ce que**
- des liens de l'échafaudage métallo-organique (MOF) contiennent des terminaux photo-commutables à leurs chaînes latérales, et
- l'ensemble des unités photo-commutables sont réglés dans un état défini, qui met au disposition une sélectivité de gaz définie par variation du temps d'éclairage, variation de la longueur d'onde de rayonnement et/ou par l'usage d'une relation définie de lumière avec deux longueurs d'onde différentes, l'état défini étant **caractérisé par** une certaine relation bien définie d'isomères cis à trans dans le film d'échafaudage métallo-organique.

2. Procédé selon la revendication 1, **caractérisé en ce que** le transport de gaz est côntrolé par un cis-tans circuit de photo des unités terminaux.

3. Procédé selon l'une des revendications 1 ou 2, **caractérisé en ce que** le transport de gaz est côntrolé par un circuit de photo réversible.

4. Procédé selon l'une des revendications 1 à 3, **caractérisé en ce que** le transport de gaz est conduit par un substrat de l'échafaudage métallo-organique supporté, un substrat d'échafaudage métallo-organique auto-supporté et/ou un substrat de matrix mélangé contenant des cristaux d'échafaudage métallo-organique comme remplissages.

5. Procédé selon l'une des revendications 1 à 4, **caractérisé en ce que** le film d'échafaudage métallo-organique est arrangé sur un substrat porteur poreux.

6. Procédé selon l'une des revendications 1 à 5, **caractérisé en ce que** le film d'échafaudage métallo-organique est arrangé sur un substrat de membrane poreuse.

7. Procédé selon l'une des revendications 1 à 6, **caractérisé en ce que** le film d'échafaudage métallo-organique a une épaisseur de 0,001 à 1 µm, préféré 0,01 à 0,5 µm, plus préféré 0,1 à 0,3 µm, en particulier environ 0.2 µm.

8. Procédé selon l'une des revendications 1 à 7, **caractérisé en ce que** l'échafaudage métallo-organique a au moins deux liens différents, qui forment un réseau d'échafaudage métallo-organique.

9. Procédé selon l'une des revendications 1 à 8, **caractérisé en ce que** l'échafaudage métallo-organique contient des groupes isomérisables, qui contiennent C=C, N=N et/ou C=N des doubles liaisons.

10. Un appareil pour la séparation des gaz, contenant une enveloppe pour des gaz à séparer, une paroi de séparation sélectivement perméable aux gaz, la paroi de séparation contenant un film d 'échafaudage métallo-organique, contenant des unités photo-commutables, au moins une sortie retentat sur la même côté de la paroi de séparation comme l'entrée, au moins une sortie pénétrante sur le côté opposé de la paroi de séparation et au moins un guide de lumière, **caractérisé en ce que**
- les liens de l'échafaudage métallo-organique contiennent des terminaux photo-commutables à leurs chaînes latérales,
- l'ensemble des unités photo-commutables sont réglés dans un état défini, qui met au disposition une sélectivité de gaz définie par variation du temps d'éclairage, variation de la longueur d'onde de rayonnement et/ou par l'usage d'une relation définie de lumière avec deux longueurs d'onde différentes, le'état défini étant **caractérisé par** une certaine relation bien définie d'isomères cis à trans dans le film d'échafaudage métallo-organique.

11. Appareil selon la revendication 10, que contient au moins une entrée pour gaz coulant.

12. Appareil selon les revendications 10 ou 11 pour la séparation des gaz dans un procédé selon les revendications 1 à 9.
